(19)

Europäisches Patentamt
European Patent Office
Office européen des brevets

(11) **EP 2 321 076 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(21) Anmeldenummer: **09777897.1**

(22) Anmeldetag: **14.08.2009**

(51) Int Cl.:
**B22F 1/00** *(2006.01)*

(86) Internationale Anmeldenummer:
**PCT/EP2009/005925**

(87) Internationale Veröffentlichungsnummer:
**WO 2010/020381 (25.02.2010 Gazette 2010/08)**

(54) **BINDEMITTEL FÜR DIE HERSTELLUNG GESINTERTER FORMTEILE**

BINDER FOR THE PRODUCTION OF SINTERED MOLDED ARTICLES

LIANT POUR LA PRODUCTION DE PIÈCES MOULÉES FRITTÉES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.08.2008 DE 102008038231**

(43) Veröffentlichungstag der Anmeldung:
**18.05.2011 Patentblatt 2011/20**

(73) Patentinhaber: **GKN Sinter Metals Holding GmbH
42477 Radevormwald (DE)**

(72) Erfinder:
• **KRUZHANOV, Vladislav
42897 Remscheid (DE)**
• **WIMBERT, Lars
58332 Schwelm (DE)**
• **DE CRISTOFARO, Nicola
42859 Remscheid (DE)**

(74) Vertreter: **Maxton Langmaack & Partner
Postfach 51 08 06
50944 Köln (DE)**

(56) Entgegenhaltungen:
WO-A2-2004/039519    DE-C1- 4 314 694
US-A1- 2004 081 574    US-B1- 6 235 076

• POSZMIK G ET AL: "Technology pushes green strength up in single press and sinter cycle" METAL POWDER REPORT, MPR PUBLISHING SERVICES, SHREWSBURY, GB, Bd. 59, Nr. 7, 1. Juli 2004 (2004-07-01), Seiten 26-28,31, XP004522904 ISSN: 0026-0657

**Beschreibung**

Die vorliegende Erfindung betrifft ein Bindemittel für die Herstellung gesinterter Formteile, als auch eine Mischung zur Herstellung gesinterter Formteile umfassend ein solches Bindemittel und Verfahren zur Herstellung einer Mischung zur Herstellung gesinterter Formteile und ein Verfahren zur Herstellung gesinterter Formteile.

Für die Herstellung gesinterter Formteile, sei es in üblichen Pressverfahren oder aber mittels Spritzgießen oder Strangpressen ist es notwendig, Bindemittel einzusetzen, damit ein formhaltiger Grünling aus einer Pulvermischung hergestellt werden kann. Dieser Grünling wird dann nachfolgend gesintert. Die Pulver können dabei Kunststoff-, keramische oder metallische Pulver sein, wobei die Pulver selbst auch Mischungen verschiedener Kunststoffe, keramischer Materialien und/oder Metalle beziehungsweise Legierungen oder aber sonst wie bearbeitete Pulver, beispielsweise umhüllte Pulver, sein können. Im Falle von Metallpulvern können dabei sowohl reine Metallpulver, beispielsweise Eisenpulver, oder aber auch Pulvermischungen, vorlegierte Pulver, legierte Pulver oder aber auch umhüllte Pulver, auch in Mischungen unterschiedlicher Pulver miteinander, eingesetzt werden.

Die eingesetzten Bindemittel müssen nach Herstellung eines Grünlings entfernt werden. Dies kann beispielsweise thermisch vor dem Sinterschritt geschehen, es kann jedoch auch eine katalytische Entfernung vorgesehen sein, oder aber der Einsatz von Lösemitteln, wodurch die Bindemittel gelöst und aus dem Grünling entfernt werden. Nachteilig an diesen bekannten Verfahren ist einerseits der Einsatz höherer Temperaturen und/ oder zusätzlicher Substanzen, so dass bei der Entbinderung, wie die Entfernung des Bindemittels aus Grünlingen auch bezeichnet wird, nachteilig auf die eine oder andere Art und Weise beeinflusst wird, sei es dahingehend, dass die Kosten durch den Einsatz zusätzlicher Substanzen steigen, sei es, dass eine Kostensteigerung durch Anwendung höherer Temperaturen erfolgt, oder aber sei es, dass nicht ausreichend dichte Teile erzielbar sind.

So offenbart beispielsweise die DE 43 14 694 C1 ein Verfahren zur Herstellung von Sinterformteilen durch Verformen eines Gemisches aus einem sinterbaren keramischen oder metallischen Pulver und Polyoxymethylen oder eines Copolymerisates mit überwiegenden Anteilen an Oxymethyleneinheiten als Bindemittel zu einem Grünkörper, Entfernen des Bindemittels katalytisch mit Säure, indem man zur Entfernung des Bindemittels eine Säure verwendet, die bei Raumtemperatur fest ist und bei höheren Temperaturen sublimiert oder schmilzt und verdampft. Das dort beschriebene Verfahren umfasst somit einen Entbinderungsschritt, bei welchem ein zusätzliches Mittel, nämlich hier eine Säure, eingesetzt wird.

Es ist daher Aufgabe der vorliegenden Erfindung, ein Bindemittel als auch sinterbare Mischungen und Verfahren zur Herstellung solcher Mischungen als auch zur Herstellung gesinterter Formteile zur Verfügung zu stellen, mittels welchem die aus dem Stand der Technik bekannten Nachteile vermieden werden.

Zur Lösung dieser Aufgabe wird erfindungsgemäß ein Bindemittel für die Herstellung gesinterter Formteile vorgeschlagen, umfassend

a) eine erste Substanz mit einem ersten Schmelzpunkt und einem erstem Dampfdruck bei 80 °C;
b) eine zweite Substanz mit einem zweiten Schmelzpunkt und einem zweiten Dampfdruck bei 80 °C,

wobei der Schmelzpunkt der ersten und zweiten Substanz maximal etwa 150 °C beträgt und der Dampfdruck der ersten und zweiten Substanz mindestens etwa 5 Torr (667 Pa) bei 80 °C beträgt. Bevorzugt weichen der erste und der zweite Dampfdruck maximal um etwa 60% voneinander ab. Vorzugsweise ist dabei der erste und der zweite Dampfdruck der ersten und der zweiten Substanz unterschiedlich, er kann jedoch auch identisch sein. Vorteilhafterweise liegt der erste Dampfdruck und der zweite Dampfdruck der ersten Substanz und der zweiten Substanz bei maximal etwa 100 Torr (13332 Pa = 133,32 hPa = 13,32 kPa), somit entsprechend etwa 13 kPa, wobei weiter bevorzugt der erste und zweite Dampfdruck der ersten und zweiten Substanz in einem Bereich von etwa 5 Torr (667 Pa), bevorzugt etwa 8 Torr (1067 Pa), bis etwa 70 Torr (9333 Pa) liegt, jeweils bezogen auf 80 °C. Der Dampfdruck kann dabei bestimmt werden gemäß der allgemeinen Formel

$$\log_{10} p = -A/T + B,$$

wobei p der Dampfdruck in Torr (1 Torr = 133,3 Pa) ist, A eine Konstante, welche numerischen Werken entnommen werden kann, in K, T die Temperatur in K und B eine Konstante in Torr ist. Die Umrechnung von Torr in Pascal muss dabei nach Bestimmung des Dampfdruckes mit der Einheit Torr erfolgen. Der Logarithmus in der obigen Formel ist ein dekadischer Logarithmus. Die Konstanten A und B können numerischen Zahlenwerken, beispielsweise Landolt-Börnstein, Zahlenwerte und Funktionen aus Physik. Chemie. Astronomie. Geophysik und Technik, 6. Auflage, Springer Verlag Berlin Göttingen Heidelberg, 1960, Band II, 2. Teil S. 89 ff. entnommen werden (Beispiel: für Naphthalin in A = 3616 und B = 11,109 bei 1 Torr (133 Pa), für 1,2,4,5-Tetramethylbenzol ist A = 2313 und B = 8,281 bei 1 Torr (133 Pa)). Dabei entspricht 0 °C 273,15 K. Der Dampfdruck kann gemessen und bestimmt werden beispielsweise gemäß der Normen ASTM E 1194 oder ASTM E 1782.

Überraschenderweise hat sich gezeigt, dass durch den Einsatz zweier Substanzen in dem erfindungsgemäßen Bindemittel mit einem niedrigen Schmelzpunkt und insbesondere einer Abweichung des ersten und zweiten Dampfdrucks der ersten und zweiten Substanz voneinander um maximal etwa 60 % bei Einsatz des erfindungsgemäßen Bindemittels in sinterfähigen Mischungen diese eine gute Fließfähigkeit aufweisen, der nach dem Pressen erhaltene Grünling eine hohe Formstabilität aufweist als auch eine hohe Gründichte. Die erste und zweite Substanz wirken auch als Porenbildner. Besonders bevorzugt ist dabei der Einsatz des erfindungsgemäßen Bindemittels im Metallspritzgussbeziehungsweise Metallstrangpressverfahren. Es kann dann bei Schneckentemperaturen des eingesetzten Extruders von nicht mehr als etwa 100 °C, bevorzugt nicht mehr als etwa 90 °C, gearbeitet werden, verglichen mit den sonst üblichen hohen Schneckentemperaturen der eingesetzten Extruder von üblicherweise in einem Bereich von etwa 150 bis etwa 180 °C.

Im Sinne der vorliegenden Erfindung wird der Begriff "etwa" insbesondere in Zusammenhang mit der Schmelztemperatur und dem Dampfdruck der ersten und/oder zweiten Substanz, aber auch in Zusammenhang mit weiteren Zahlenparametern dahingehend verstanden, dass von diesen Abweichungen der angegebenen Werte von +-3 %, bevorzugt +- 2 %, weiter bevorzugt +-1 % möglich sind, ohne dass der mit der vorliegenden Erfindung angestrebte Erfolg hierdurch gefährdet wird. Auch außerhalb der vorgenannten Bereiche, soweit die gewählten Parameter nicht weit außerhalb liegen, kann zumindest teilweise der Erfolg der vorliegenden Erfindung erreicht werden.

Die erste und zweite Substanz des erfindungsgemäßen Bindemittels ist dabei vorzugsweise ausgewählt aus einer Gruppe umfassend organische Substanzen, weiter bevorzugt umfassend organische Substanzen mit einer molaren Masse von kleiner etwa 300 g/mol. Besonders bevorzugt ist die erste und zweite Substanz ausgewählt aus einer Gruppe umfassend zyklische Kohlenwasserstoffe, aromatische Kohlenwasserstoffe und/ oder halogenierte Kohlenwasserstoffe, wobei die halogenierten Kohlenwasserstoffe teil-, aber auch gegebenenfalls vollständig halogeniert sein können. Besonders bevorzugt ist dabei die erste und/oder zweite Substanz ausgewählt aus einer Gruppe umfassend Camphen, Tetramethylbenzol, insbesondere 1,2,4,5-Tetramethylbenzol, Naphthalin oder Tetrabromkohlenstoff oder deren Derivate. Unter Derivaten im Sinne der vorliegenden Erfindung werden dabei solche Substanzen verstanden, welche anstatt Substituenten wie Wasserstoff, Methyl oder Brom andere Substitutenten aufweisen wie beispielsweise Fluor, Chlor oder Ethylen, oder aber gleiche Substituenten an anderer Stelle (z. B. 1,2,4,5-Tetramethylbenzol und 1,2,3,5-Tetramethylbenzol). Aber auch andere als die genannten Substituenten sind vorstellbar. Besonders bevorzugt ist als erste Substanz Naphthalin ausgewählt. Besonders bevorzugt ist als zweite Substanz 1,2,4,5-Tetramethylbenzol ausgewählt. Aber auch andere Bindemittelsysteme mit einer ersten und zweiten Substanz und den spezifischen beanspruchten Parametern sind möglich, beispielsweise ein System aus 1,2,4,5-Tetramethylbenzol und Tetrabromkohlenstoff als erste und/oder zweite Substanz.

Besonders bevorzugt liegt der Schmelzpunkt der ersten und der zweiten Substanz maximal bei etwa 100 °C, weiter bevorzugt bei maximal etwa 90 °C. Weiter bevorzugt liegt der Schmelzpunkt der ersten und der zweiten Substanz in einem Bereich von etwa 30 °C, bevorzugt etwa 50 °C, bis etwa 85 °C. In einer weiter bevorzugten Ausführungsform unterscheidet sich der erste und der zweite Dampfdruck der ersten und der zweiten Substanz um maximal etwa 50 % voneinander. In einer weiter bevorzugten Ausführungsform der vorliegenden Erfindung liegt der erste und der zweite Dampfdruck der ersten und der zweiten Substanz maximal bei etwa 60 Torr (7999 Pa = 7,999 kPa) bei 80 °C.

Das erfindungsgemäße Bindemittel kann dabei auch noch weitere Substanzen umfassen, welche als Additive eine Verarbeitbarkeit des Bindemittels sicherstellen, beispielsweise solche, die die Lagerstabilität erhöhen. Es kann jedoch auch vorgesehen sein, dass das Bindemittel drei oder mehr als Bindemittel wirkende Substanzen umfasst, wobei dann deren jeweilige Schmelzpunkte maximal etwa 150 °C betragen und die Dampfdrucke derselben maximal etwa 60 % voneinander abweichen. So können beispielsweise auch Mischungen aus Naphthalin, 1,2,4,5-Tetramethylbenzol und Tetrabromkohlenstoff vom erfindungsgemäßen Bindemittel umfasst sein.

Die vorliegende Erfindung betrifft weiterhin eine Mischung zur Herstellung gesinterter Formteile, umfassend

a) mindestens ein sinterfähiges Material; und

b) ein erfindungsgemäßes Bindemittel wie vorstehend beschrieben.

Als sinterfähiges Material können die eingangs in der vorliegenden Erfindung beschriebenen Materialien eingesetzt werden. Der Fachmann wird dabei diejenigen Materialien auf Grundlage seines Fachwissens auswählen, welche für das jeweils angewendete Herstellungsverfahren zur Herstellung von Formteilen und die Formteile selbst geeignet sind. Besonders bevorzugt ist dabei der Einsatz metallischer Pulver, insbesondere eisenhaltiger Pulver, wobei auch reine Eisenpulver oder Pulver aus Eisenlegierungen oder aber Mischungen hieraus bevorzugt eingesetzt werden können. Beispielhaft einsetzbare sinterfähige Materialien sind beispielsweise Chrom-Nickel-Stahl, Bronzen, Nickelbasislegierungen wie Hastelloy, Inconel, Metalloxiden, -nitriden, Siliciden oder dergleichen, weiterhin aluminiumhaltige Pulver beziehungsweise Mischungen, wobei die Mischungen hochschmelzende Bestandteile wie beispielsweise Platin oder dergleichen enthalten können. Die eingesetzten Pulver und deren Teilchengrößen sind vom jeweiligen Einsatzzweck abhängig. Bevorzugte eisenhaltige Pulver sind die Legierungen 316 L, 304 L, Inconel 600, Inconel 625, Monel und Hastelloy B, X und C sowie 17-4 PH. Auch Titan und/oder Titanlegierungen sind als Materialien geeignet, auch in Mischungen mit anderen Materialien, insbesondere eisenhaltigen Pulvern.

Weiter bevorzugt umfasst die erfindungsgemäße Mischung zur Herstellung gesinterter Formteile weiterhin mindestens ein Stabilisierungsmittel und/oder mindestens ein Antiagglomerationsmittel. Das Stabilisierungsmittel ist dabei vorzugsweise ausgewählt aus einer Gruppe umfassend Kunststoffmaterialien, besonders bevorzugt eine Gruppe, umfassend Polyethylene, Polypropylene, Polyvinylalkohole, Polyvinylacetate, Polystyrole und/oder Polyoximethylene. Besonders bevorzugt ist das Stabilisierungsmittel ein Polyethylen beziehungsweise eine Mischung verschiedener Polyethylene. Das Stabilisierungsmittel dient dabei in erster Linie dazu, eine ausreichende Reststabilität eines zumindest teilentbinderten Bauteiles zu gewährleisten, insbesondere eines Bauteiles, bei welchem die erste und/oder zweite Substanz bereits entfernt wurden. Das Antiagglomerationsmittel ist vorzugsweise ausgewählt aus einer Gruppe umfassend organische Säuren, weiter bevorzugt ist als Antiagglomerationsmittel Stearinsäure von der erfindungsgemäßen Mischung umfasst.

Vorzugsweise ist das erfindungsgemäße Bindemittel in der erfindungsgemäßen Mischung in einer Menge von etwa 5 Gew.-% bis etwa 12 Gew.-%, weiter bevorzugt in einer Menge von etwa 6 Gew.-% bis etwa 9 Gew.-%, bezogen auf die Gesamtmenge der Mischung, enthalten. Das Stabilisierungsmittel ist vorzugsweise in der erfindungsgemäßen Mischung in einer Menge von etwa 1 Gew.-% bis etwa 6 Gew.-%, weiter bevorzugt etwa 2 Gew.-% bis etwa 4,5 Gew.-%, jeweils bezogen auf die Gesamtmenge der Mischung, in dieser enthalten. Das Antiagglomerationsmittel ist vorzugsweise in einer Menge von etwa 0,1 Gew.-% bis etwa 1,3 Gew.-%, weiter bevorzugt in einer Menge von etwa 0,25 Gew.-% bis etwa 0,7 Gew.-%, jeweils bezogen auf die Gesamtmenge der Mischung, in dieser enthalten.

Im Sinne der vorliegenden Erfindung kann auch vorgesehen sein, dass das mindestens eine Antiagglomerationsmittel und/oder das mindestens eine Stabilisierungsmittel von dem erfindungsgemäßen Bindemittel umfasst ist, so dass eine entsprechende Bindemittelmischung in einer vorbereiteten Darreichungsform einem sinterfähigen Material zugesetzt werden kann.

Die vorliegende Erfindung betrifft weiterhin ein Verfahren zur Herstellung einer Mischung zur Herstellung gesinterter Formteile, wobei mindestens ein sinterfähiges Material vorgelegt und dieses mit dem Bindemittel vermischt wird. Weiter bevorzugt wird das sinterfähige Material vor Mischung mit dem Bindemittel mit mindestens einem Antiagglomerationsmittel versetzt. Weiter bevorzugt ist das mindestens eine Antiagglomerationsmittel in einem Lösemittel gelöst, wobei bevorzugt diese Lösung mit dem mindestens einen sinterfähigen Material gemischt wird. In einer weiter bevorzugten Ausführungsform wird ein aus dem gelösten Antiagglomerationsmittel und sinterfähigem Material bestehendes Gemisch vor Zugabe des Bindemittels getrocknet. Als Lösemittel für das Antiagglomerationsmittel beziehungsweise die Mischung der Antiagglomerationsmittel werden vorzugsweise Alkohole, bevorzugt Ethanol, eingesetzt. Die Lösung des Antiagglomerationsmittels in einem Lösemittel wird dabei vorzugsweise bei erhöhter Temperatur, bevorzugt bei einer Temperatur in einem Bereich von etwa 20 °C, bevorzugt etwa 50 °C bis etwa 70 °C durchgeführt. Die Trocknung der Mischung aus Antiagglomerationsmittel und sinterfähigem Material erfolgt vorzugsweise bei einer Temperatur in einem Bereich von etwa 40 °C bis etwa 80 °C.

Bevorzugt wird bei dem erfindungsgemäßen Verfahren zur Herstellung einer Mischung zur Herstellung gesinterter Formteile vorgesehen, dass zusammen mit dem Bindemittel oder nachfolgend der Zugabe des Bindemittels mindestens ein Stabilisierungsmittel zugegeben wird. Dabei ist bevorzugt, dass das mindestens eine Stabilisierungsmittel vom Bindemittel umfasst ist, so dass in einem Schritt diese Bindemittelmischung dem sinterfähigen Material, bevorzugt dem bereits mit dem mindestens einen Antiagglomerationsmittel versetzten sinterfähigen Material, zugegeben wird.

Nachfolgend der Zugabe des Bindemittels beziehungsweise der Bindemittelmischung wird die Mischung (auch Feedstock genannt) vorzugsweise extrudiert und kann so gelagert werden. Das zu sinternde Formteil wird vorzugsweise mittels Spritzgießen oder Strangpressen hergestellt. Aber auch eine Herstellung im üblichen Pressverfahren ist nicht ausgeschlossen. Mit dem vorgenannten Verfahren wird dann ein formhaltiger Grünling erhalten.

Die vorliegende Erfindung betrifft schließlich weiterhin ein Verfahren zur Herstellung gesinterter Formteile durch Verformen einer erfindungsgemäßen Mischung zur Herstellung gesinterter Formteile, umfassend

a) mindestens ein sinterfähiges Material; und
b) ein erfindungsgemäßes Bindemittel und Entfernen der ersten und/oder zweiten Substanz des mindestens einen Bindemittels durch Erwärmung.

Alternativ kann ein Verfahren zur Herstellung gesinterter Formteile durch Verformen einer erfindungsgemäßen Mischung zur Herstellung gesinterter Formteile vorgesehen sein, umfassend

a) mindestens ein sinterfähiges Material; und
b) ein erfindungsgemäßes Bindemittel und Entfernen der ersten und/oder zweiten Substanz des mindestens einen Bindemittels durch Anwendung eines Druckes von kleiner etwa 50 Torr.

Die beiden vorstehend genannten alternativen Verfahren können auch kombiniert werden im Sinne der vorliegenden Erfindung, das heißt, es kann sowohl eine Erwärmung als auch eine Anwendung von Niederdruck bei einem Druck kleiner 50 Torr (6666 Pa) vorgesehen sein. Weiterhin kann auch vorgesehen sein, dass in einem einzigen Entbinderschritt nicht nur die erste und/oder zweite Substanz, sondern sogleich auch das Stabilisierungsmittel und/oder Agglomerationsmittel, welches der erfindungsgemäßen Mischung zugesetzt sein kann, entfernt wird, so dass ein nachfolgender zusätzlicher Entbinderschritt entfällt. Es können jedoch auch zwei oder mehr Entbinderschritte vorgenommen werden, wobei auch in einem ersten Binderschritt die erste und in einem zweiten Binderschritt die zweite Substanz des mindestens einen Bindemittels entfernt werden kann.

In Ausnahmefällen könnte auch vorgesehen sein, dass nicht nur ein, sondern zwei oder drei erfindungsgemäße Bindemittelmischungen eingesetzt werden. Aber auch der Einsatz sonstiger, aus dem Stand der Technik bekannter Bindemittel ist möglich.

Vorteilhafterweise wird die Entfernung des mindestens einen erfindungsgemäßen Bindemittels (Entbinderung) bei einer Temperatur von maximal bis etwa 150 °C durchgeführt, weiter bevorzugt bei einer Temperatur von maximal bis etwa 120 °C, noch weiter bevorzugt bei einer Temperatur von maximal bis etwa 100 °C, noch weiter bevorzugt bei einer Temperatur von maximal bis etwa 90 °C.

Nachfolgend der Entbinderung des erhaltenen Grünlings, wobei in einem zusätzlichen Entbinderschritt auch weitere Bindemittel bei höheren Temperaturen entfernt werden können, oder aber zusätzlich eine katalytische Entfernung oder aber eine Entfernung durch Lösung der eingesetzten zusätzlichen Bindemittel erfolgt, wird der Grünling gesintert. Hier besteht eine Vielzahl unterschiedlicher Technologien. So können die angewandten Temperaturverläufe bei der Sinterung unterschiedlich gewählt werden. Der Fachmann wird hier aufgrund seines Fachwissens für die jeweils eingesetzten sinterfähigen Materialien und in Hinblick auf die gewünschten Eigenschaften der zu fertigenden gesinterten Formteile Temperaturverläufe bei der Sinterung wählen. Nachfolgend der Sinterung kann vorzugsweise unmittelbar eine gegebenenfalls notwendige Wärmebehandlung, insbesondere ein Homogenisierungsglühen, angeschlossen werden. Dabei kann die Wärmebehandlung in Abhängigkeit von der chemischen Zusammensetzung des erhaltenen Bauteils durchgeführt werden. Alternativ oder zusätzlich zur Wärmebehandlung kann das gesinterte Bauteil auch ausgehend von der Sinter- beziehungsweise Homogenisierungsglühtemperatur vorzugsweise in Wasser oder aber über eine Gasschroffkühlung abgeschreckt werden. Nach dem Sintern ist des Weiteren eine zusätzliche Oberflächenverdichtung, allgemeiner: Ein Einbringen von Druckeigenspannungen in Oberflächenbereiche, durch Sand- oder Kugelstrahlen, Rollieren oder Ähnlichem möglich.. Auch Beschichtungen können nachfolgend noch auf dem mittels des erfindungsgemäßen Verfahrens hergestellten Bauteil aufgebracht werden.

Vorteilhafterweise beträgt eine Temperatur eines eingesetzten Verformungswerkzeuges im erfindungsgemäßen Verfahren zur Herstellung gesinterter Formteile maximal etwa 120 °C, weiter bevorzugt maximal etwa 100 °C. Wird beispielsweise als Verformungswerkzeug eine Metallspritzvorrichtung eingesetzt, so beträgt die Temperatur der in dieser angeordneten Schnecke beziehungsweise Schneckenabschnitte vorzugsweise maximal etwa 100 °C, weiter bevorzugt maximal etwa 90 °C. Dabei können selbstverständlich für unterschiedliche Bereiche der Schnecke auch unterschiedliche Temperaturen vorgesehen werden, wobei diese dann jede für sich maximal etwa 100 °C, weiter bevorzugt maximal etwa 90 °C betragen kann.

Diese und weitere Vorteile der vorliegenden Erfindung werden anhand des nachfolgenden Beispieles näher erläutert.

Zunächst sei vorausgeschickt, dass die in dem nachfolgenden Beispiel angeführten Merkmale den Gegenstand der vorliegenden Anmeldung nicht beschränken. Vielmehr sind die jeweils in der allgemeinen Beschreibung einschließlich dem Beispiel angegebenen Merkmale zur Weiterbildung miteinander kombinierbar. Insbesondere ist auch eine Beschränkung auf das Metallspritzgießen beziehungsweise Metallstrangpressen weder vorgesehen noch gewollt, vielmehr können auch andere Materialien beziehungsweise andere Verfahren zum Einsatz kommen.

Zunächst wurde eine Mischung zur Herstellung gesinterter Formteile, welche vom Fachmann auch als Feedstock angesprochen wird, hergestellt aus 92 Gew.-% Eisenpulver mit einer Partikelgröße von $d_{90} < 10\ \mu m$, $d_{50} < 5\ \mu m$ und $d_{10} < 2\ \mu m$ und jeweils 2,4 Gew.-% Naphthalin als erste Substanz des Bindemittels und 2,4 Gew.-% 1,2,4,5-Tetramethylbenzol als zweite Substanz des Bindemittels, sowie 2,8 Gew.-% Polyethylen als Stabilisierungsmittel (Polyethylen MY 00 der Firma Ter Hell Plastic GmbH, Herne, Deutschland) als auch 0,4 Gew.-% Stearinsäure hergestellt. Die Gewichtsprozentangaben beziehen sich jeweils auf die Gesamtmenge des Feedstocks.

Der Feedstock wurde herstellt, indem zunächst die Stearinsäure mit 350 ml reinem Ethanol vermischt und anschließend in einem geschlossenen Behälter auf eine Temperatur in einem Bereich von etwa 55 °C bis etwa 60 °C erwärmt wurde. Hierdurch wurde eine Lösung der Stearinsäure in Ethanol erzielt. Diese Lösung wurde dann dem Eisenpulver zugegeben, und die erhaltene Mischung in einem üblichen Mischgerät gemischt. Nachfolgend wurde eventuell überstehende Flüssigkeit abgetrennt, und die erhaltene Mischung aus Eisenpulver und Stearinsäure beispielsweise in einem Heizschrank bei etwa 60 °C getrocknet.

Anschließend wurde das getrocknete Gemisch in einem handelsüblichen Kneter bei etwa 105 °C unter Zugabe von Polyethylen, Tetramethylbenzol und Naphthalin geknetet, wobei die Zugabe der vorgenannten Substanzen gleichzeitig oder nachfolgend in beliebiger Reihenfolge erfolgen kann. Hierdurch wurde dann schließlich ein Feedstock erhalten, welcher nachfolgend extrudiert und in einem verschließbaren und dichten Behälter gelagert werden kann.

Nachfolgend wurden mittels des extrudierten Feedstocks durch Metallspritzgießen (MIM) Formteile in Form einer Rollengabel (siehe Fig. 1 mit einer Baulänge von 3,3 cm hergestellt. Dabei wurde die Schneckentemperatur der Spritzgießvorrichtung in einem Bereich von etwa 70 bis etwa 100 °C gewählt. Weitere Spritzparameter waren ein Einspritzdruck von 1000 bar, eine Einspritzzeit von einer Sekunde, ein aufgegebener Nachdruck von 100 bar. Die Kühlzeit betrug zwischen 10 Sekunden und etwa 30 Sekunden. Die Düsentemperatur der Spritzvorrichtung lag in einem Bereich von etwa 50 °C bis etwa 150 °C.

Durch das Metallspritzgießen wurden formhaltige Grünlinge erhalten, welche zunächst beispielsweise in einem Heizschrank auf etwa 60 °C für 8 bis 10 Stunden erwärmt wurden, wodurch die Bindemittelmischung aus Naphthalin und Tetramethylbenzol entfernt wurde. Ein weitergehender Verfahrensschritt ist nicht notwendig, insbesondere nicht der Zusatz eines Lösemittels für das Bindemittel oder aber eines Katalysators, beispielsweise in Form einer anorganischen Säure wie Salpetersäure, wie dies aus dem Stand der Technik bekannt ist. Eine getrennte Entfernung des Antiagglomerationsmittels beziehungsweise des Porenbildners vor dem Sinterschritt ist nicht notwendig, kann jedoch erfolgen. Es kann auch sein, dass die Entformung des Antiagglomerationsmittels bereits bei der Erwärmung des Grünlings, also bei der Entfernung des Naphthalins und Tetramethylbenzols erfolgt. Vorteilhafterweise erfolgt die Entfernung des Antiagglomerationsmittels als auch des Porenbildners jedoch im Sinterschritt.

Nachfolgend der Entbinderung durch Entfernung der Mischung aus der Tetramethylbenzol und Naphthalin wurde der Formgrünling in einem Ofen gesintert. Dabei kann ein Bandofen, Rollenofen , Hubbalkenofen oder ein anderer geeigneter Ofen z.B. ein diskontinuierlicher Ofen eingesetzt werden. Der Ofen wurde dabei nach Einlegung des Formgrünlings zunächst für eine Stunde bis 150 °C aufgeheizt, nachfolgend die Temperatur von 150 °C für zwei Stunden gehalten, nachfolgend der Ofen weiter aufgeheizt bis etwa 460 °C über etwa zwei Stunden, nachfolgend bei der Temperatur von etwa 460 °C für etwa zwei Stunden gehalten, woraufhin dann ein Aufheizen bis etwa 1225 °C für etwa 2,5 Stunden und ein Halten auf dieser Temperatur für etwa eine Stunde erfolgte. Nachfolgend wurde das nunmehr gesinterte Formteil abgekühlt und dem Ofen entnommen.

Durch die vorliegende Erfindung wird somit ein Bindemittel als auch eine Mischung zur Herstellung gesinterter Formteile (Feedstock) als auch ein Verfahren zur Herstellung eines solchen Feedstocks beziehungsweise Verfahrens zur Herstellung gesinterter Formteile vorgeschlagen, welches eine Alternative zu den aus dem Stand der Technik bekannten Verfahren darstellt, und aufgrund des Einsatzes nur geringer Temperaturen bei der Entbinderung insbesondere Kostenersparnisse vorteilhafterweise vorliegen, aber auch sehr formhaltige Grünlinge und hochdichte gesinterte Formteile erhältlich sind.

## Patentansprüche

1. Bindemittel für die Herstellung gesinterter Formteile umfassend

   a) eine erste Substanz mit einem ersten Schmelzpunkt und einem erstem Dampfdruck bei 80 °C;
   b) eine zweite Substanz mit einem zweiten Schmelzpunkt und einem zweiten Dampfdruck bei 80 °C,

   wobei der Schmelzpunkt der ersten und zweiten Substanz maximal etwa 150 °C beträgt und der Dampfdruck der ersten und zweiten Substanz mindestens etwa 5 Torr (667 Pa) bei 80 °C beträgt.

2. Bindemittel gemäß Anspruch 1, **dadurch gekennzeichnet, dass** der erste und der zweite Dampfdruck maximal um etwa 60 % voneinander abweichen.

3. Bindemittel gemäß Anspruch 1, **dadurch gekennzeichnet, dass** der Dampfdruck der ersten und der zweiten Substanz unterschiedlich ist.

4. Bindemittel gemäß einem der vorhergehenden Ansprüche, **dadurch gekennzeichnet, dass** der erste Dampfdruck der ersten Substanz und der zweite Dampfdruck der zweiten Substanz maximal etwa 100 Torr (13332 Pa) bei 80 °C beträgt.

5. Bindemittel gemäß einem der vorhergehenden Ansprüche, **dadurch gekennzeichnet, dass** die erste und zweite Substanz ausgewählt ist aus einer Gruppe umfassend zyklische Kohlenwasserstoffe, aromatische Kohlenwasserstoffe und/oder halogenierte Kohlenwasserstoffe.

6. Bindemittel gemäß einem der vorhergehenden Ansprüche, **dadurch gekennzeichnet, dass** der Schmelzpunkt der ersten und der zweiten Substanz maximal etwa 100 °C beträgt.

7. Bindemittel gemäß einem der vorhergehenden Ansprüche, **dadurch gekennzeichnet, dass** die erste Substanz Naphthalin ist.

8. Bindemittel gemäß einem der vorhergehenden Ansprüche, **dadurch gekennzeichnet, dass** die zweite Substanz 1,2,4,5-Tetramethylbenzol ist.

9. Mischung zur Herstellung gesinterter Formteile, umfassend

    a) mindestens ein sinterfähiges Material; und
    b) mindestens ein Bindemittel gemäß einem der Ansprüche 1 bis 8.

10. Mischung gemäß Anspruch 9, **dadurch gekennzeichnet, dass** diese weiterhin mindestens ein Stabilisierungsmittel und/oder mindestens ein Antiagglomerationsmittel umfasst.

11. Mischung gemäß einem der Ansprüche 9 oder 10, **dadurch gekennzeichnet, dass** das Bindemittel in einer Menge von etwa 2 Gew.-% bis etwa 8 Gew.-% bezogen auf die Gesamtmenge der Mischung, in der Mischung enthalten ist.

12. Verfahren zur Herstellung einer Mischung gemäß einem der Ansprüche 9 bis 11, wobei mindestens ein sinterfähiges Material vorgelegt und dieses mit dem Bindemittel vermischt wird.

13. Verfahren gemäß Anspruch 12, **dadurch gekennzeichnet, dass** das sinterfähige Material vor Mischung mit dem Bindemittel mit mindestens einem Antiagglomerationsmittel versetzt wird.

14. Verfahren gemäß Anspruch 13, **dadurch gekennzeichnet, dass** das mindestens eine Antiagglomerationsmittel in einem Lösemittel gelöst und diese Lösung mit dem mindestens einen sinterfähigen Material gemischt wird.

15. Verfahren gemäß Anspruch 14, **dadurch gekennzeichnet, dass** ein aus dem gelösten Antiagglomerationsmittel und sinterfähigen Material bestehendes Gemisch vor Zugabe des Bindemittels getrocknet wird.

16. Verfahren gemäß einem der Ansprüche 12 bis 15, **dadurch gekennzeichnet, dass** zusammen mit dem Bindemittel oder nachfolgend der Zugabe des Bindemittels mindestens ein Stabilisierungsmittel zugegeben wird.

17. Verfahren gemäß einem der Ansprüche 12 bis 16, **dadurch gekennzeichnet, dass** die Mischung extrudiert wird.

18. Verfahren zur Herstellung gesinterter Formteile durch Verformen einer Mischung gemäß einem der Ansprüche 9 bis 11 und Entfernen der ersten und/oder zweiten Substanz des mindestens einen Bindemittels durch Erwärmung.

19. Verfahren zur Herstellung gesinterter Formteile durch Verformen einer Mischung gemäß einem der Ansprüche 9 bis 11 und Entfernen der ersten und/oder zweiten Substanz des mindestens einen Bindemittels durch Anwendung eines Druckes von kleiner etwa 50 Torr (6666 Pa).

20. Verfahren gemäß Anspruch 18 oder 19, **dadurch gekennzeichnet, dass** die Entfernung des mindestens einen Bindemittels bei einer Temperatur von maximal bis etwa 150 °C durchgeführt wird.

21. Verfahren gemäß einem der Ansprüche 18 bis 20, **dadurch gekennzeichnet, dass** nachfolgend der Entfernung des Bindemittels ein erhaltener Grünling gesintert wird.

22. Verfahren gemäß einem der Ansprüche 18 bis 21, **dadurch gekennzeichnet, dass** die Verformung bei einer Temperatur eines eingesetzten Verformungswerkzeuges von maximal etwa 120 °C erfolgt.

**Claims**

1. Binder for the production of sintered molded articles comprising

    a) first substance with a first melting point and a first vapour pressure at 80 °C;
    b) a second substance with a second melting point and a second vapour pressure at 80 °C,

    whereby the melting point of the first and second substance is at the most about 150 °C, and the vapour pressure of the first and second substance is at least about 5 torr (667 Pa) at 80 °C.

2. Binder in accordance with claim 1, **characterised in that** the first and the second vapour pressure deviates from each other at the most around 60 %.

3. Binder in accordance with claim 1, **characterised in that** the vapour pressure of the first and the second substance is different.

4. Binder in accordance with anyone of the preceding claims, **characterised in that** the first vapour pressure of the first substance and the second vapour pressure of the second substance is at the most around 100 torr (13332 Pa) at 80 °C.

5. Binder in accordance with anyone of the preceding claims, **characterised in that** the first and second substance is selected from a group comprising cyclic hydrocarbons, aromatic hydrocarbons and/or halogenated hydrocarbons.

6. Binder in accordance with anyone of the preceding claims, **characterised in that** the melting point of the first and the second substance is at the most about 100 °C.

7. Binder in accordance with anyone of the preceding claims, **characterised in that** the first substance is naphthalene.

8. Binder in accordance with anyone of the preceding claims, **characterised in that** the second substance is 1,2,4,5- tetramethylbenzene.

9. Mixture for producing sintered molded articles, comprising

   a) at least one sinterable material;
   b) at least one binder in accordance with claims 1 to 8.

10. Mixture in accordance with claim 9, **characterised in that** it further comprises at least one stabilisation agent and/or at least one antiagglomeration agent.

11. Mixture in accordance with claim 9 or 10, **characterised in that** the binder is present in the mixture in an amount between about 2 Gew.-% to about 8 Gew.-%, referred to the whole amount of the mixture.

12. Method for producing a mixture in accordance with anyone of claims 9 to 11, whereby at least the sinterable material is charged first and is than mixed with the binder.

13. Method according to claim 12, **characterised in that** the sinterable material is compounded with at least one antiagglomeration agent before mixture with the binder.

14. Method according to claim 13, **characterised in that** the at least one antiagglomeration agent is dissolved in a solvent, and said solution is mixed with the at least one sinterable material.

15. Method according to claim 14, **characterised in that** a mixture of the solved antiagglomeration agent and the sinterable material is dried before adding of the binder.

16. Method according to anyone of claims 12 to 15, **characterised in that** at least one stabilisation agent is added together with the binder or after the adding of the binder.

17. Method according to anyone of claims 12 to 16, **characterised in that** the mixture is extruded.

18. Method for producing sintered molded articles through deforming of a mixture in accordance with anyone of claims 9 to 11, and removing of the first and/or second substance of the at least one binder by heating.

19. Method for producing sintered molded articles through deformation of a mixture in accordance with anyone of claims 9 to 11, and removing of the first and/or second substance of the at least one binder by using a pressure of below about 50 torr (6666 Pa).

20. Method in accordance with claim 18 or 19, **characterised in that** the removal of the at least one binder is carried out at a temperature of at the most until about 150 °C.

21. Method according to anyone of claims 18 to 20, **characterised in that** after the removal of the binder the thus obtained green part is sintered.

22. Method in accordance with anyone of claims 18 to 21, **characterised in that** the deformation is carried out at a temperature of the used deformation tool of at the most about 120 °C.

**Revendications**

1. Liant pour la fabrication de pièces moulées frittées, comprenant

   a) une première substance avec un premier point de fusion et une première tension de vapeur à 80 °C,
   b) une deuxième substance avec un deuxième point de fusion et une deuxième tension de vapeur à 80 °C,
   le point de fusion de la première et de la deuxième substance étant au maximum d'environ 150 °C et la tension de vapeur de la première et de la deuxième substance étant au moins de 5 torr (667 Pa) à 80 °C.

2. Liant selon la revendication 1, **caractérisé en ce que** la première et la deuxième tension de vapeur diffèrent l'une de l'autre au maximum d'environ 60 %.

3. Liant selon la revendication 1, **caractérisé en ce que** les tensions de vapeur de la première et de la deuxième substance sont différentes.

4. Liant selon l'une quelconque des revendications précédentes, **caractérisé en ce que** la première tension de vapeur de la première substance et la deuxième tension de vapeur de la deuxième substance sont au maximum d'environ 100 Torr (13332 Pa) à 80 °C.

5. Liant selon l'une quelconque des revendications précédentes, **caractérisé en ce que** la première et la deuxième substance sont choisies dans un groupe comprenant des hydrocarbures cycliques, des hydrocarbures aromatiques et/ou des hydrocarbures halogénés.

**6.** Liant selon l'une quelconque des revendications précédentes, **caractérisé en ce que** les points de fusion de la première et de la deuxième substance sont au maximum d'environ 100 °C.

**7.** Liant selon l'une quelconque des revendications précédentes, **caractérisé en ce que** la première substance est du naphtalène.

**8.** Liant selon l'une quelconque des revendications précédentes, **caractérisé en ce que** la deuxième substance est du 1,2,4,5-tétraméthylbenzène.

**9.** Mélange pour la fabrication de pièces moulées frittées, comprenant

   a) au moins un matériau pouvant être fritté et
   b) au moins un liant selon l'une quelconque des revendications 1 à 8.

**10.** Mélange selon la revendication 9, **caractérisé en ce que** celui-ci comprend en outre au moins un agent stabilisant et/ou un agent antiagglomérant.

**11.** Mélange selon l'une quelconque des revendications 9 ou 10, **caractérisé en ce que** le liant est contenu dans le mélange en une quantité d'environ 2 % en poids à environ 8 % en poids, rapportée à la quantité totale du mélange.

**12.** Procédé de préparation d'un mélange selon l'une quelconque des revendications 9 à 11, dans lequel on part d'un matériau pouvant être fritté et on le mélange avec le liant.

**13.** Procédé selon la revendication 12, **caractérisé en ce qu'**avant d'être mélangé au liant, le matériau pouvant être fritté est additionné d'au moins un agent antiagglomérant.

**14.** Procédé selon la revendication 13, **caractérisé en ce que** ledit au moins un agent antiagglomérant est dissous dans un solvant et **en ce que** cette solution est mélangée avec ledit au moins un matériau pouvant être fritté.

**15.** Procédé selon la revendication 14, **caractérisé en ce qu'**un mélange consistant en l'agent antiagglomérant dissous et le matériau pouvant être fritté est séché avant l'addition du liant.

**16.** Procédé selon l'une quelconque des revendications 12 à 15, **caractérisé en ce que** l'on ajoute au moins un agent stabilisant en même temps que le liant ou à la suite de l'addition du liant.

**17.** Procédé selon l'une quelconque des revendications 12 à 16, **caractérisé en ce que** le mélange est extrudé.

**18.** Procédé de fabrication de pièces moulées frittées par formage d'un mélange selon l'une quelconque des revendications 9 à 11 et par élimination de la première et/ou de la deuxième substance dudit au moins un liant par chauffage.

**19.** Procédé de fabrication de pièces moulées frittées par formage d'un mélange selon l'une quelconque des revendications 9 à 11 et par élimination de la première et/ou de la deuxième substance dudit au moins un liant par l'exercice d'une pression de moins de 50 Torr (6666 Pa) environ.

**20.** Procédé selon la revendication 18 ou 19, **caractérisé en ce que** l'élimination dudit au moins un liant est effectuée à une température atteignant au maximum environ 150 °C.

**21.** Procédé selon l'une quelconque des revendications 18 à 20, **caractérisé en ce qu'**à la suite de l'élimination du liant, une ébauche obtenue est frittée.

**22.** Procédé selon l'une quelconque des revendications 18 à 21, **caractérisé en ce que** le formage est effectué à une température d'un outil de formage utilisé de 120 °C environ au maximum.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4314694 C1

**In der Beschreibung aufgeführte Nicht-Patentliteratur**

- Zahlenwerke und Funktionen. Physik. Chemie. Astronomie. Geophysik und Technik. Springer Verlag, 1960, vol. II, 2, 89 ff